# EUROPEAN PATENT APPLICATION

(11) **EP 2 778 954 A1**
(43) Date of publication of application: **17.09.2014**
(21) Application number: 13159159.6
(22) Date of filing: 14.03.2013
(51) Int. Cl.: G06F 17/30

(54) **Displaying information in a presentation mode**

(71) Applicant: BlackBerry Limited, Waterloo, ON N2K 0A7 (CA)
(72) Inventor: BHATNAGAR, Prateek, Windsor Ontario N9B 2Y7 (CA)
(74) Representative: Noble, Nicholas

(57) **Abstract**

A system and method are provided for adapting how links are rendered in a presentation. In one example, the system and method adapt a text-based link in a presentation to a machine scannable code. An example system can identify (702) a text-based link within a slide or frame to be rendered as part of a presentation, the text-based link pointing to a resource external to the presentation. The system can further generate (704) a non-text, machine-readable link corresponding to the text-based link, and insert (706) the non-text, machine-readable link into the slide at a location associated with the text-based link. Then the system can render (708) the non-text, machine-readable link within the slide. A second method is disclosed for generating (808) a digest of links in a presentation that is accessible via a single scannable code. A third method is disclosed for analyzing (904) links to identify links for conversion to scannable codes.

## Description

### FIELD OF TECHNOLOGY

The present disclosure relates generally to presentation content, and more specifically to a system and method for digitally displaying presentation content so that audience members can more easily access resources identified within the presentation content.

### BACKGROUND

Presentation software, such as Microsoft® PowerPoint™, Apple® Keynote®, or Corel® Show, enables users to present information to others, typically in a digitally enhanced slideshow format. For example, a presenter can prepare slides on a personal computer having animations, pictures, sounds, images, other multimedia items, or links to content. Links can enrich presentations as another type of multimedia content. While links to content are conveniently 'clickable' using the presentation software, the convenience of such links can be abruptly replaced with extreme inconvenience for viewers of the presentation. For example, the presenter may include a link to additional materials or supporting resources related to the presentation. If presentation viewers desire to access the link while viewing the presentations, the viewers must resort to the tedious, time-consuming, and error-prone task of manually copying the link address, whether by hand or by entering the link address directly in an address bar of a web browser, for example. Additionally, viewers of a non-clickable electronic version of the presentation or people reading a physical printout of the presentation slides are unable to click on the link. This problem can be further exacerbated by viewing difficulties, such as if a participant has an occluded view of the link address, or if a photocopy of the presentation introduces an error of some kind in the image of the presentation slide over the link address. This problem can be even further exacerbated in the case of hyperlinks, where the viewable text of the link is different from the underlying link.

One way to ease this inconvenience is to replace link addresses with shortened URL addresses manually, such as those provided by URL shorteners. However, shortened addresses are often a confusing jumble of upper and lower case characters, numbers, or other characters that are not meaningful and may be difficult for users to verify that they have written properly. Further, such shortened addresses are very susceptible to typographical errors when entered in a web browser, for example.

In view of the high burden, time, and complexity associated with accessing presentation links, presentation viewers generally ignore lengthy links regardless of their value or interest to the viewers. This practice leads to potentially lost opportunities for presentation viewers as well as the presenter. When displayed in the context of a presentation or other display to a group of viewers, the ease and benefits of referencing content using links are diminished greatly, among introducing other problems.

### BRIEF DESCRIPTION OF THE DRAWINGS

A description is provided herein with reference to specific examples illustrated in the appended drawings. These drawings depict only example implementations of the disclosure and are not intended to limit the scope of the disclosure.

FIG. 1 shows devices for rendering a presentation to an audience;

FIG. 2 shows a presentation processor;

FIG. 3 shows a first example presentation slide;

FIG. 4 shows a second example presentation slide;

FIG. 5 shows a third example presentation slide;

FIG. 6 shows a fourth example presentation slide and a digest slide;

FIG. 7 shows an example process for adapting a link in a presentation either in advance or in real time;

FIG. 8 shows an example process for preparing a digest of links in a presentation;

FIG. 9 shows an example process for detecting whether to adapt a link in a presentation; and

FIG. 10 illustrates a computing device system according to an example implementation.

### DETAILED DESCRIPTION

Various examples of computer generated presentations containing digital content, such as content links or links, are provided herein, along with various approaches for processing, rendering, or displaying such presentations and links. While specific examples are discussed, it should be understood that this is for illustration purposes only. A person skilled in the relevant art will recognize that other components and configurations may be used without departing from the spirit of the disclosure and/or from the scope of the appended claims.

Several definitions that apply throughout this document are now presented. The phrase "coupled" is defined as connected, whether directly or indirectly through intervening components, and is not necessarily limited to physical connections. Coupled devices are devices that are in signal communication with one another.

The term "electronic device" is defined as any device that is capable of at least accepting data, transmitting data, and executing commands. For example, electronic devices may include, but are not limited to, portable communication devices, mobile communication devices, mobile computers, smartphones, computing pads, tablet computers, personal computers, desktop computers, laptop computers, netbooks, servers, routers, set-top phones, or other electronic devices capable of one or more of accepting data, transmitting data, and executing commands.

Systems and methods are provided for adapting how presentation content is presented to viewers observing the presentation. The presentation content can be created using software including Microsoft® PowerPoint™, Apple® Keynote®, or Corel® Show, for example, and can be displayed in various formats such as PDF documents, image slide shows, video-based presentations, and so forth. Such presentation documents often contain content links, such as hyperlinks, that a user composing the presentation embeds in the presentation document to quickly access external data by clicking on the content link. The external data can include a website, a document, a network folder, a remote computer, a remote printer, an email address, an FTP server, an application in an app store, or some other network resource. A person viewing the presentation on a network-enabled device or a presenter presenting the presentation to a group using a laptop connected to a projector can follow a content link to access data referenced in the presentation.

Presentations can be output to a group of individuals on a large display such as a projector, television, or computer screen. Alternatively, presentations can be distributed to audience members as printed materials such as handouts. When the presentation is output or distributed in these ways, the audience is unable to 'click' on the content link to access the data. To access content associated with the link under these circumstances, the audience must record the link, such as by manually transcribing the link address or memorizing the link address. However, even transcribing the link address may not be an option for accessing content that is indicated by an underlined word, but the link address itself is not displayed. Often, even when the presentation is broadcast to audience devices electronically, the broadcast of the presentation is often similar to a screencast. With screencasts, any links appearing in the document are not clickable by the viewers because these links are presented in a document that is effectively a video stream.

In order to facilitate sharing content corresponding to the links with audience members, the example system can detect the presence of links in a presentation and can convert these links into machine-readable codes, such as Quick Response (QR) codes. In one example, a presentation device can be configured to decode and display the QR code while operating in a presentation mode or while connected to or paired with a projector. The audience members can use electronic devices to scan and decode the QR codes in order to access the linked information without needing to transcribe, copy, or remember the corresponding link address.

While QR codes are referenced throughout this application as a link associated with content, any type of machine-readable code can be substituted therefor. According to one example, an electronic device can convert a hyperlink into a QR code as a presentation is rendered for display or prior to rendering the presentation for display. The electronic device can display the QR code in place of or in addition to and proximate to conventional hyperlinked text. While viewing the presentation, an audience member can use a camera on an electronic device to capture the QR code, decode the QR code, and access the content or resource to which the hyperlink points. According to one example, the electronic device associated with an audience member can be configured to capture and process the QR code while the audience member is viewing the electronic presentation or while the audience member is viewing a hard copy of the presentation.

In one implementation, the presentation device causes the projector to display a modified presentation containing the QR code while the presenter's device, such as a laptop, tablet, or smart phone, displays the original presentation without the QR code. This implementation allows the presenter to access the resource by clicking on the hyperlink. Additionally, this implementation can preserve potentially limited screen real estate on the presenter's device while permitting audience members access to the resource using the QR code.

In a first example method for replacing a single link in a presentation with a scannable code, an example system can identify a text-based link to a resource external to the presentation within a slide to be rendered as part of a presentation. The example system can generate a non-text, machine-readable link to the resource, and insert the non-text, machine-readable link into the slide at a location associated with the text-based link. Then the system can render the non-text, machine-readable link for output as part of the slide.

In a second example method for generating a digest of links in a presentation that is accessible via a single scannable code, an example system can identify a group of text-based links pointing to respective resources external to the presentation within a presentation and compile the group of text-based links into a digest. Then the system can publish the digest at a network address and generate a non-text, machine-readable link to the network address that can be inserted in to the presentation.

In a third example method, the system analyzes links to determine whether or not to convert a link to a scannable code. The example system can identify a link within a presentation that points to a resource external to the presentation. Based on an analysis of the link, the system can assign the link a transcription score that indicates an amount of effort needed for a user to transcribe the link. When the transcription score exceeds a threshold, the system can generate a non-text, machine-readable link to the resource, and insert the non-text, machine-readable link in the presentation at a location associated with the analyzed link. For example, the system can determine that a link to external resource "http://www.youtube.com" is sufficiently transcribable, because that link is short and extremely widely known. In this case, the link is unchanged and is not supplemented by corresponding non-text, machine-readable link. The system can determine that another link to a much longer network address or URL, such as "http://jupiter.cit.some-university.edu/faculty/-mjs/syllabi/2013/spring/Spring_2013_CIT_3250_Class_Syllabus.PDF" has a transcription score exceeding a threshold and is therefore not sufficiently transcribable due to its long length or for some other reasons. In this case, the system can generate a QR code pointing to a link address and can insert the QR code into the presentation. Variations of these example methods are discussed below.

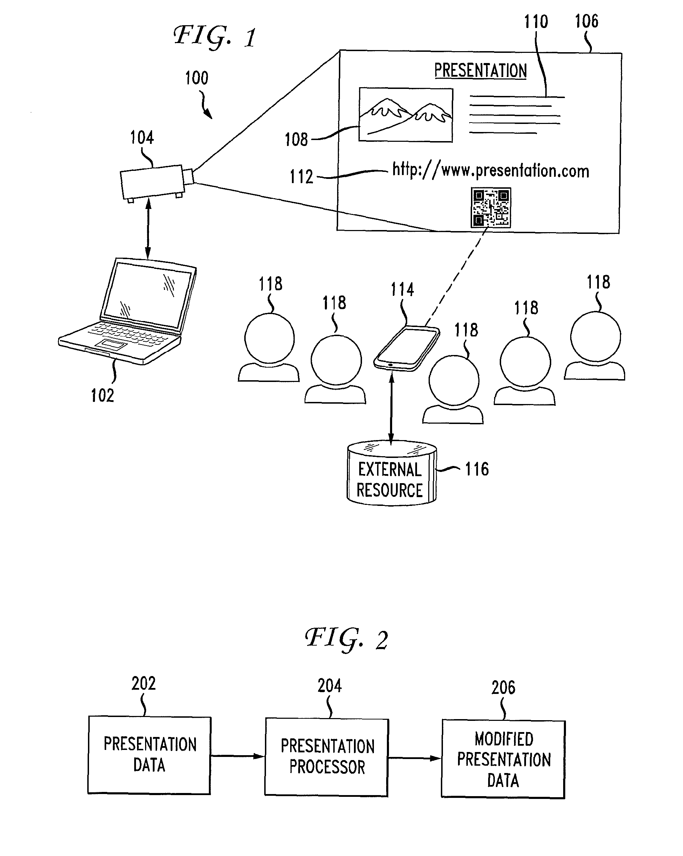

FIG. 1 shows an arrangement 100 of devices for rendering a presentation to an audience. A presentation device 102, such as a laptop, desktop, smartphone, or tablet computing device, stores, accesses, or generates the presentation data, and provides that data to a presentation rendering device 104, such as a digital or overhead projector, a television screen, computer monitor, a printer, a screencast that shares the presentation directly to audience devices, and so forth. In one aspect, a presenter can compose, organize, or gather the presentation data directly on the presentation device 102. In another aspect, the presenter can compose the presentation data on a separate device and access the presentation data at the presentation device 102, such as by retrieving the presentation data from a removable storage device or from a network share. The presentation device 102 and the presentation rendering device 104 can be incorporated as a same physical device, or can be separate devices that communicate via a direct wired or wireless connection, or via a network.

The various device types shown in FIG. 1 can be any kind of example presentation device 102, such as a portable communication device, a mobile communication device, a mobile computer, a smartphone, a computing pad, a tablet computer, a personal computer, a desktop computer, a laptop computer, a netbook, a set-top phone, a portable digital assistant (PDA), or other electronic devices capable of at least accepting data, transmitting data, and executing commands. The example presentation device 102 can include a non-transitory or a transitory computer-readable storage medium that can be internal, external, portable, or detachable. For example, the computer-readable storage medium may be any available media that may be accessed by a general purpose or special purpose computer, including the functional design of any special purpose processor. By way of example, and not limitation, such non-transitory computer-readable media may include RAM, ROM, EEPROM, CD-ROM or other optical disk storage, magnetic disk storage or other magnetic storage devices, flash memory, or any other medium that may be used to carry or store desired program code in the form of computer-executable instructions, data structures, or processor chip design. When information is transferred or provided over a network or another communications connection (either hardwired, wireless, or combination thereof) to a computer, the computer properly views the connection as a computer-readable medium. Thus, any such connection is properly termed a computer-readable medium.

According to one example, the presentation device 102 may be a smartphone and may include at least one processor configured to execute instructions for processing a presentation, identifying links in the presentation, and converting those links to machine-readable codes, such as QR codes, to be inserted into the presentation. The example presentation device 102 may include a display, an input device such as a keyboard, and a network interface with a telecommunications or other type of network. As the user inputs data via the input device, the presentation device 102 can compose a presentation, modify a presentation, start a presentation, initiate communication with a presentation rendering device 104, follow a link, or the like.

The presentation rendering device 104 can render or output on a large display 106 for an audience 118. In an alternate embodiment, the presentation rendering device 104 includes a printer which renders the presentation by printing presentation data on paper. The presentation data can be in the form of slides, a document, notes, or the like. The presentation can include images 108, text 110, other multimedia objects, and a link 112 to content stored at an external resource 116. The link 112 can be the text of an address such as a URL, or some other element on the presentation slide that is a 'clickable' link to an address. The link 112 can point to a network address, a network resource, an email address, an IP address, a different location in the presentation, or virtually any other addressable resource.

In this example, the presentation device 102 has modified the presentation so that the link 112 is also represented as a QR code 113 pointing to content stored at the external resource 116. To follow the link 112, an audience member 118 can take a picture of the display 106 with a camera-enabled device 114 capable of recognizing, reading, and decoding QR codes. The camera-enabled device 114 decodes the QR code 113 to extract content associated with the QR code 113. Then the camera-enabled device 114 can retrieve or access content associated with the QR code 113 from the external resource 116. The camera-enabled device 114 can access content corresponding to the displayed URL independently of the presentation device 102, the presentation rendering device 104, and electronic devices associated with other audience members 118. In one embodiment, the camera-enabled device 114 can save or bookmark the link corresponding to the QR code for retrieval and processing at a later time. The QR code 113 may access a URL and may include additional instructions for processing the URL or additional descriptive material about the URL.

FIG. 2 shows a presentation processor 204, which can be incorporated as hardware and/or software components of the presentation device 102, the presentation rendering device 104, or both. Alternatively, the presentation processor 204 can be provided in a separate component and can be communicatively coupled to the presentation device 102, the presentation rendering device 104, or both. The presentation processor 204 can operate in real time while a presentation is being rendered for output or display. Alternatively, the presentation processor 204 can be configured to preprocess a presentation in advance of rendering. In one aspect, the presentation processor 204 is situated between the presentation device 102 and the presentation rendering device 104, such that a presenter sees an 'original' or unmodified version of the presentation, while the display 106 renders to the audience a modified presentation that includes one or more scannable codes. In some variations, the presentation processor 204 inserts a single scannable code. Alternatively, the presentation processor 204 can insert multiple different types of equivalent scannable codes that point to content stored at a same external resource 116.

The presentation processor 204 can include logic or instructions to identify links within a presentation, such as by parsing code, for example, XML or HTML code. Alternatively, the presentation processor 204 can identify links by parsing a presentation document format. The presentation processor 204 can further determine how and where the presentation is being presented, characteristics of the audience, and other attributes that may affect whether a particular link should be converted to a scannable code. The presentation processor 204 can receive data from external sensors, from a user, from a user profile or previously stored preferences, or from other sources. Then, as the presentation processor 204 receives presentation data 202, the presentation processor 204 can modify the presentation data 202 based on the received data to generate modified presentation data 206. The presentation processor 204 can save the modified presentation data 206 as a separate presentation file, as a stream of data to render, over the original presentation file, or the like.

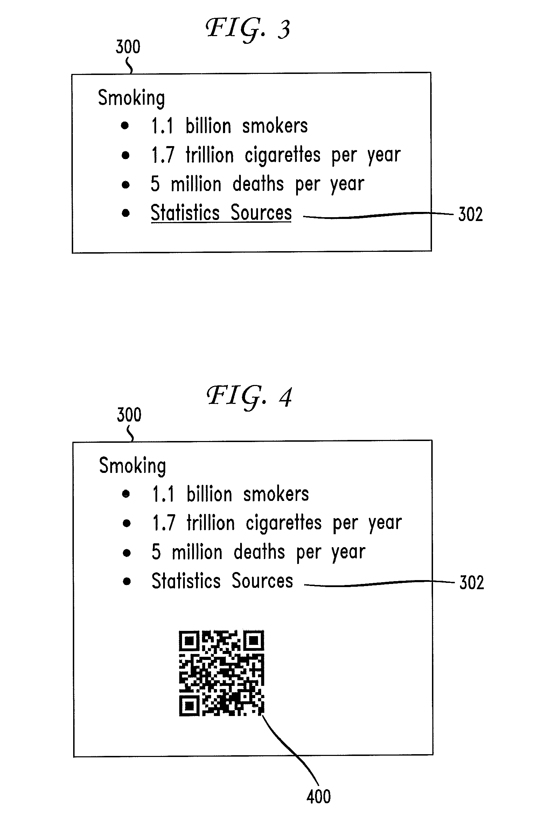

In one variation, the presentation processor 204 examines the presentation data 202 to detect user-generated tags, flags, or markings that identify links for conversion to scannable codes or links that should not be converted to scannable codes. For example, a user composing the presentation can tag links while the user adds the links to the presentation or while reviewing slides of the presentation. Then, the presentation processor 204 can follow the link tags for instructions. In another embodiment, the presentation processor 204 is incorporated into a software package for creating and editing presentations. In this example, an author of a presentation can see, while creating the presentation, how the links are converted to scannable codes. FIGs. 3-6 illustrate various possible modified presentation data 206 that can be rendered on a display such as a projector.

FIG. 3 shows a first example presentation frame or slide 300. Certain types of presentations can include multiple slides with distinct transitions between the slides. Other presentations types may format the presentation data in ways other than slides. For illustration purposes, presentations with discrete slides are depicted herein. Slide 300 is formatted to include a heading, various text-based bullet points, and a text link 302. The text link 302 includes the underlined words "Statistics Source", which is not a link address. The text link 302 is underlined to indicate that the text corresponds to a link. In some variations, the text link 302 can duplicate the link address. When a user is composing or presenting the slide 300, the user can click on the text link 302 to access the associated content. For example, the user can click on the text link 302 with a mouse, a tap on a touch screen, or other input, to access the resource to which the link points. By contrast, audience members are not able to click on the text link 302 displayed via a projector or printed on a page. The presentation processor 204 can process data on the slide 300 to extract the link and generate an equivalent QR code that points to a same address as the link address, whether directly or indirectly.

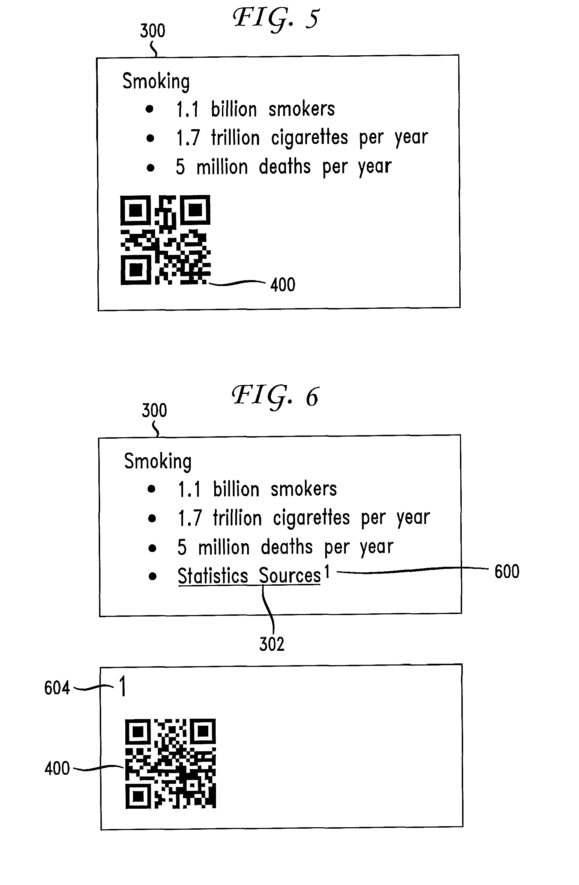

FIG. 4 shows a second example presentation slide with the QR code 400 inserted directly into the slide 300 adjacent to the text link 302. The system can also modify the original text link 302, as shown, to remove the underlining when rendering the slide 300 to the audience. Removing the underlining can remove visual clutter on the slide 300 or reduce confusion for the audience since the text link 302 is not clickable by the audience. FIG. 5 shows a third example presentation slide 300. In this example, the presentation processor 204 removes the text link 302 entirely from slide 300 and substitutes a QR code 400 pointing to a same place as the text link 302 or pointing to an equivalent resource or equivalent content at a different location.

FIGs. 4 and 5 show examples of inserting the QR code 400 on a same slide 300 that contained the original text link 302. However, the presentation processor 204 can further modify a presentation by generating a new slide and inserting the QR code on the new slide. FIG. 6 shows the example presentation slide 300 and a new slide 602. In this example, the text link 302 is absent on the slide 300 and this area remains an empty space 600. The presentation processor 204 can insert the new slide 602 immediately after slide 300. In this example, the new slide 602 includes a large QR code 400. This approach can be useful to enhance the ability of very large crowds to scan the QR code 400 by rendering the QR code 400 as large as possible. Additionally, this approach can be useful in situations where the presentation is printed with multiple slides to a single page. Further, this allows the presenter to maintain the attention of the audience by controlling when to display the QR code. If one slide contains multiple links, the presentation processor 204 can insert 'footnotes' or other reference indicators (not shown) to indicate which QR code corresponds to which information on the slide. In another variation, the presentation processor 204 can combine multiple links in a single digest, such as a custom web page of multiple links, and include a single QR code in the presentation that points to the digest. In this way, audience members can scan a single digest QR code to access a list of multiple links instead of scanning multiple QR codes throughout the presentation.

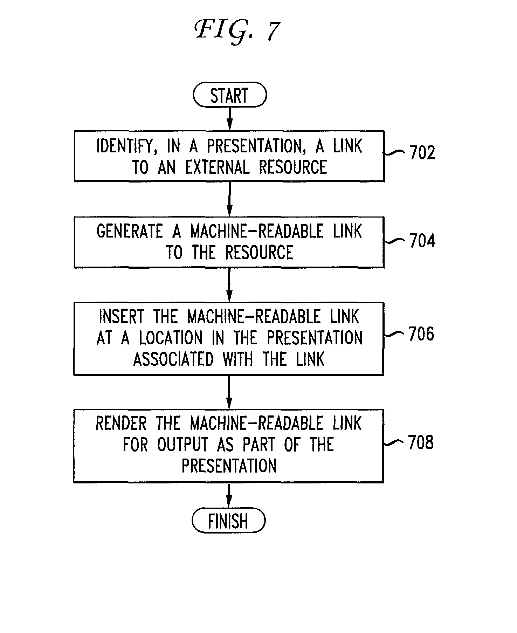

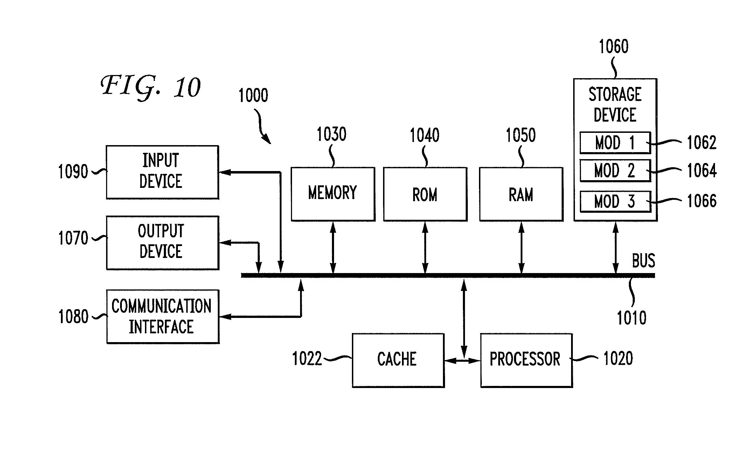

Various examples of methods and systems for automatic correction or automatic completion of numeric inputs are described with reference to FIGs. 7-9. While FIGs. 7-9 illustrate a particular order of steps, one of ordinary skill in the art will appreciate that the steps may be executed in any order to accomplish the technical advantages of the present disclosure, may include fewer or more steps than illustrated, may be modified to include other steps, or may be performed in different orders than the orders illustrated. Each block represents one or more processes, methods, or subroutines. The steps may be implemented in a system such as an electronic device, a server, a presentation streaming device, smartphone, electronic tablet, or any other type of electronic device capable of at least accepting presentation data, processing the presentation data, and rendering or modifying the presentation data. Each block shown in FIGs. 7-9 may be carried out by a processor 1020 of electronic device 1000. The processor 1020 illustrated in FIG. 10 may include one or more processors or one or more processing systems. The flow charts illustrated in FIGs. 7-9 will be described with reference to the electronic device 1000 shown in FIG. 10. While the principles are discussed primarily in terms of an electronic device such as a computer or tablet computing device, the same principles can be applied to virtually any device that participates in composing, storing, rendering, or displaying presentation data.

FIG. 7 shows an example process for adapting a link provided within a presentation either in advance of rendering the presentation or in real time while rendering the presentation. In step 702, example device 1000 can identify a text-based link to a resource external to the presentation from a slide to be rendered as part of a presentation. The system can identify the slide as being rendered in a live presentation mode, such as receiving an indication of an active connection to a projector. In this case, the modifications to any links in the slide can be implemented in real time as the presentation is ongoing. The modifications can be implemented only on the rendered display and not on the presenter's device. In another example, the modifications can be implemented on both the rendered display and the presenter's device. Still further, the modifications can be applied to a printed set of presentation slides without modifying the electronic presentation, for example.

The electronic device 1000 can generate a non-text, machine-readable link to the external resource in step 704. The non-text, machine-readable link can include a linear barcode, a 2-dimensional barcode, a QR code, a polar coordinate barcode, or a color-based barcode, for example. Other types of scannable codes can be used, so that a camera-enabled device can capture an image of the scannable code and decode information encoded therein.

In step 706, the electronic device 1000 can insert the non-text, machine-readable link at a location in the presentation associated with the text-based link. Inserting the non-text, machine-readable link further can include inserting into the presentation such as after the slide, an additional slide containing the non-text, machine-readable link. The electronic device 1000 can be configured to remove the text-based link from the slide and insert the non-text, machine-readable link in the slide to replace the text-based link. Alternatively, the electronic device 1000 can be configured to insert the non-text, machine-readable link in the slide proximate to the text-based link. The non-text, machine-readable link can be inserted on a same slide as the text link or on another slide in the presentation. The non-text, machine-readable link can encode the link or equivalent data. Additionally, the non-text, machine-readable link can encode additional information, such as additional text or other descriptive information. The machine-readable link can optionally encode information that is not directly linked in the slide, but which a user may desire to transcribe and which would be difficult to write down in the time the slide is rendered for display. Alternatively, the presenter may choose to flag certain content to be converted to a scannable code. For example, a presentation slide could include a lengthy quote and a QR code may be provided at the end of the slide that contains the text of the quote. Alternatively, the QR code can include a link to a source of the quote or instructions for sending an email containing the quote. In an example embodiment, the device 1000 encodes the information displayed on the slide 300 and displays the information in the form of a QR code that can be scanned by a camera-enabled device. When the camera-enabled device scans the QR code, the camera-enabled device decodes the QR code and displays the information on a display of the camera-enabled device. Advantageously, an individual viewing slide 300 need not transcribe the information displayed on the slide 300.

The electronic device 1000 can insert these non-text, machine-readable links at the bottom of a slide, proximate to an associated link, on separate pages, in place of the associated link, or as separate presentation elements that can be displayed optionally upon input received from the presenter. In one variation, a machine-readable link is inserted in the presentation in place of the original link and additional descriptive text describing the machine-readable link is also inserted near the machine-readable link.

In step 708, the electronic device 1000 can optionally render the non-text, machine-readable link for output as part of the slide or output data for rendering the presentation including the non-text, machine-readable link. In one variation, a QR code is embedded in the presentation so that the QR code is rendered only upon request by the presenter. The presenter may desire to focus the audience on a particular point or aspect of a slide before displaying the QR code. In this way, the presenter may avoid distracting a particular portion of the audience that is inclined to grab their camera-enabled devices to scan the QR code. Thus, the electronic device 1000 can render the text-based link for output as part of the slide, and receive a presenter's input associated with the text-based link. Upon receiving the presenter's input, the electronic device 1000 can render the non-text, machine-readable link for display to the audience.

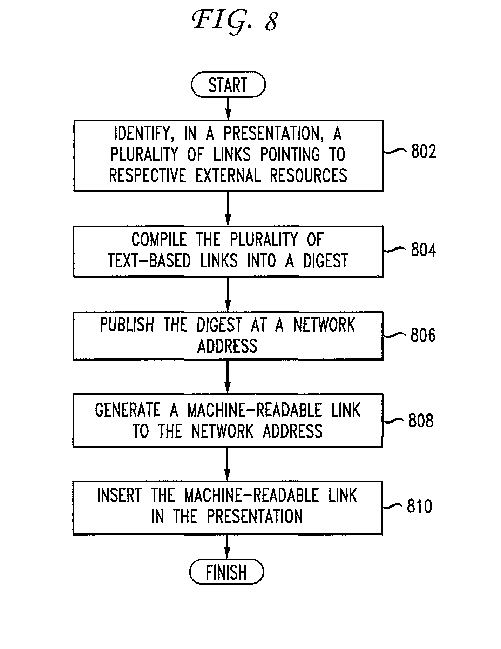

FIG. 8 shows an example process for preparing a digest of links in a presentation. The digest of links can be represented by a single scannable code that is associated with multiple individual links within the presentation. A scannable code representing a digest can be placed at the end of the presentation or at any other location or locations within the presentation. In step 802, the electronic device 1000 can identify a group of text-based links in a presentation that point to respective resources external to the presentation. In step 804, the electronic device 1000 can compile the group of text-based links into a digest, publish the digest at a network address in step 806, and in step 808 generate a non-text, machine-readable link to the network address. For example, the electronic device 1000 can generate a web page containing HTML hyperlinks corresponding to the group of text-based links and publish the web page to a web server. Alternatively, the electronic device 1000 can directly encode multiple links within a single machine-readable link. In this example, the machine-readable link is configured to encode a sufficient number of characters. In one variation, when the characters required to encode a group of links exceed the character storage capacity of a machine-readable link, the electronic device 1000 can generate multiple digest links.

The electronic device 1000 can optionally identify at least one audience attribute and determine a type of the non-text, machine-readable link based on the at least one audience attribute. For example, the electronic device can determine devices actually present in the audience based on image recognition, data exchange between devices, reported location data, an audience survey, or other mechanism. For example, the audience device may communicate via a Bluetooth® connection, a near field connection (NFC), or the like to exchange credentials between devices. Based on the capabilities of the devices available to the audience, the electronic device 1000 can determine a type of machine-readable link that is compatible with the largest amount of the devices. Alternatively, if the audience contains a certain minimum critical mass of devices capable of reading a more complex code or a code that affords enhanced features, the electronic device 1000 can insert multiple different types of codes in the presentation, with each different type of code containing the same 'base' link but with some codes optionally containing additional data.

In step 810, the electronic device 1000 can insert the non-text, machine-readable link in the presentation such as on a separate page at the end of the presentation. In another variation, the electronic device 1000 can insert the digest in the presentation on a same page as the non-text, machine-readable link, and can optionally insert the same machine-readable link on multiple pages within the presentation. The electronic device 1000 can determine a size to render the non-text, machine-readable link in the presentation based on at least one of a screen size for displaying the presentation, a resolution of a screen displaying the presentation, an expected audience distance from the presentation, or an expected number of audience members at the presentation, for example. The electronic device 1000 can generate and insert the non-text, machine-readable link in the presentation prior to rendering the presentation to an audience. Alternatively, the electronic device 1000 can generate the digest dynamically as the presentation is rendered to an audience and can insert the digest as a final slide, depending on which slides are actually displayed to the audience. In this way, the electronic device 1000 can be adapted to different presenters and can support different usage patterns of the presentation in order to generate different digests and different corresponding machine-readable links for different audiences.

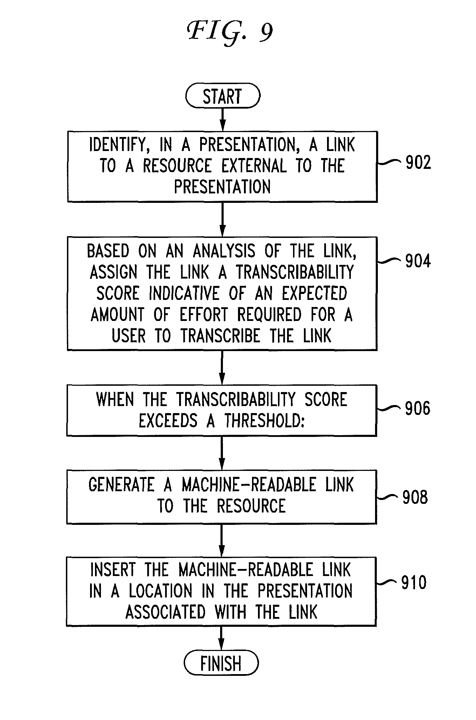

FIG. 9 shows an example process for detecting whether to adapt a link in a presentation. The electronic device 1000 can identify a link to a resource external to the presentation from a presentation slide at step 902. Rendering the presentation slide can include printing the presentation or outputting the presentation on a display.

Based on an analysis of the link, the electronic device 1000 can assign to the link a transcription score in step 904 indicating an expected amount of effort required for a user to transcribe the link. The analysis of the link may be based on a number of factors that change over time for the same presentation. The factors can include one or more of an estimated display duration, link length, link complexity, link memorability, how widely known the link is, link display size, audience attention, audience size, audience access to devices able to read the non-text, machine-readable links, audience likelihood to follow the link, audience interest in the link, similarity to other links in the presentation, or other factors. As these factors change, the electronic device 1000 may convert different subsets of links in a presentation. For example, the electronic device 1000 can consider different link types as difficult to transcribe such an extremely long link (such as http://www.booking.com/searchresults.en-us.html?sid=cc32418d47112bd6f3f63bc748b041;dcid=1;checkin_year_month_monthday=2013-01-20;checkout_year_month_monthday=2013-01-21:class_interval=1;csflt=%7B%7D;force_auto_extend=1;latitude=40.0378755;longitude=-76.3055144;map_thumb_zoom=12;order=distance;radius=55.3509233105347733;review_score_ group=empty;score_min=0;ssb=empty;;nflt=hotelfacility%3D103%3Bhotelfacility%3D96%3B;t rack_ajax_filters=1), a shorter link that does not contain natural language words (such as http://20v3q.tr7ad.biz), or a link that has easily confusable characters (such as http://www.ol110.com). On the other hand, frequently encountered links or links that are in the top 2,000 most popular web sites may be automatically considered as highly transcribable (such as www.google.com, www.wikipedia.org, or www.slashdot.org). Similarly, links that are extremely short or include natural language words may be considered as highly transcribable (such as www.shark.com or www.refrigerator.com). In one variation, the electronic device 1000 can examine a URL to discover any subdomains or additional path information beyond the base domain name, which may have a negative impact on transcribability. For example, a link to www.google.com may be easily transcribable, but a link to http://translate.google.com/#auto/ru/blackberry may be significantly less transcribable.

Another factor in determining transcribability is an amount of time the link is displayed or expected to be displayed. If a link is only of modest length and is expected to be displayed for 5 minutes, then the audience can reasonably be expected to transcribe or copy down the link address if they desire. If the link is expected to be displayed for only 15 seconds, then the audience can only be expected to transcribe very short link addresses. The amount of time the link is expected to be displayed can be based on a number of factors, such as previous presentation metrics, the speech rate of the presenter, an amount of content on the slide, and so forth.

In step 906, when the transcribability score exceeds a threshold, the electronic device 1000 can generate a non-text, machine-readable link to the resource in step 908 and insert the non-text, machine-readable link in the slide at a location associated with the link in step 910. The threshold can represent an automated decision of whether a user could more practically note down a URL in a presentation or scan a QR code on the screen during a presentation. In some cases, the link contains a large number of characters, which would lead to a very large QR code. In order to simplify the QR code and reduce its size, the electronic device 1000 can generate a shortened link to the resource, and consequently generate the non-text, machine-readable link to the resource based on the shortened link. A shortened link can save space and potentially allow a smaller QR code, such as a Version 1 QR code that is 21x21 instead of a Version 4 QR code that is 33x33 or even a larger QR code. The electronic device 1000 can optionally, when the transcribability score exceeds the threshold, remove the link from the slide.

The disclosure now turns to a brief description of a basic general purpose system or computing device, as shown in FIG. 10, which may be employed to practice the concepts disclosed herein. The components disclosed herein may be incorporated in whole or in part into handsets, transmitters, servers, and/or any other electronic or other computing device.

FIG. 10 illustrates a general-purpose computing device 1000 or electronic device; including a processing unit (CPU or processor) 1020 and a system bus 1010 that couples various system components to the processor 1020. The system components include a system memory 1030 such as read only memory (ROM) 1040 and random access memory (RAM) 1050. The system 100 may include a cache 1022 of high speed memory connected directly with, in close proximity to, or integrated as part of the processor 1020. The system 100 copies data from the memory 1030 and/or the storage device 1060 to the cache 1022 for quick access by the processor 1020. In this way, the cache provides a performance boost that avoids processor 1020 delays while waiting for data. These and other modules may control or be configured to control the processor 1020 to perform various actions. Other system memory 1030 may be available for use as well. The memory 1030 may include multiple different types of memory with different performance characteristics. It may be appreciated that the disclosure may operate on a computing device 100 with more than one processor 1020 or on a group or cluster of computing devices networked together to provide greater processing capability. The processor 1020 may include any general purpose processor and a hardware module or software module, such as module 1 1062, module 2 1064, and module 3 1066 stored in storage device 1060 configured to control the processor 1020 as well as a special-purpose processor where software instructions are incorporated into the actual processor design. The processor 1020 may be a completely self-contained computing system, containing multiple cores or processors, a bus, memory controller, cache, etc. A multi-core processor may be symmetric or asymmetric.

The system bus 1010 may be any of several types of bus structures including a memory bus or memory controller, a peripheral bus, and a local bus using any of a variety of bus architectures. A basic input/output system (BIOS) stored in ROM 1040 or the like, may provide the basic routine that helps to transfer information between elements within the computing device 100, such as during start-up. The computing device 100 further includes storage devices 1060 such as a hard disk drive, a magnetic disk drive, an optical disk drive, tape drive or the like. The storage device 1060 may include software modules 1062, 1064, 1066 for controlling the processor 1020. Other hardware or software modules are contemplated. The storage device 1060 is connected to the system bus 1010 by a drive interface. The drives and the associated computer readable storage media provide nonvolatile storage of computer readable instructions, data structures, program modules, and other data for the computing device 100. In one aspect, a hardware module that performs a particular function includes the software component stored in a non-transitory computer-readable medium in connection with the necessary hardware components, such as the processor 1020, bus 1010, display 1070, and so forth, to carry out the function. The basic components are known to those of skill in the art and appropriate variations are contemplated depending on the type of device, such as whether the communications device 100 is a small, handheld computing device, a desktop computer, or a computer server.

Although the example described herein employs the hard disk 1060, it should be appreciated by those skilled in the art that other types of computer readable media that may store data that are accessible by a computer, such as magnetic cassettes, flash memory cards, digital versatile disks, cartridges, random access memories (RAMs) 1050, read only memory (ROM) 1040, a cable or wireless signal containing a bit stream and the like, may also be used in the example operating environment. Non-transitory computer-readable storage media expressly exclude media such as energy, carrier signals, electromagnetic waves, and signals per se.

To enable user interaction with the computing device 100, an input device 1090 represents any number of input mechanisms, such as a microphone for speech, a touch-sensitive screen for gesture or graphical input, keyboard, mouse, motion input, an image sensor or a camera for capturing images or pictures, speech and so forth. An output device 1070 may also be one or more of a number of output mechanisms known to those of skill in the art. In some instances, multimodal systems enable a user to provide multiple types of input to communicate with the computing device 100. The communications interface 1080 generally governs and manages the user input and system output. There is no restriction on operating on any particular hardware arrangement and therefore the basic features here may easily be substituted for improved hardware or firmware arrangements as they are developed.

For clarity of explanation, the illustrative system example is presented as including individual functional blocks including functional blocks labeled as a "processor" or processor 1020. The functions these blocks represent may be provided through the use of either shared or dedicated hardware, including, but not limited to, hardware capable of executing software and hardware, such as a processor 1020, that is purpose-built to operate as an equivalent to software executing on a general purpose processor. For example the functions of one or more processors presented in FIG. 10 may be provided by a single shared processor or multiple processors. (Use of the term "processor" should not be construed to refer exclusively to hardware capable of executing software.) Illustrative examples may include microprocessor and/or digital signal processor (DSP) hardware, read-only memory (ROM) 1040 for storing software performing the operations discussed below, and random access memory (RAM) 1050 for storing results. Very large scale integration (VLSI) hardware examples, as well as custom VLSI circuitry in combination with a general purpose DSP circuit, may also be provided.

The logical operations of the various examples are implemented as: (1) a sequence of computer implemented steps, operations, or procedures running on a programmable circuit within a general use computer, (2) a sequence of computer implemented steps, operations, or procedures running on a specific-use programmable circuit; and/or (3) interconnected machine modules or program engines within the programmable circuits. The system 1000 shown in FIG. 10 may practice all or part of the recited methods, may be a part of the recited systems, and/or may operate according to instructions in the recited non-transitory computer-readable storage media. Such logical operations may be implemented as modules configured to control the processor 1020 to perform particular functions according to the programming of the module. For example, FIG. 10 illustrates three modules Mod 1 1062, Mod 2 1064 and Mod 3 1066 which are modules configured to control the processor 1020. These modules may be stored on the storage device 1060 and loaded into RAM 1050 or memory 1030 at runtime or may be stored as would be known in the art in other computer-readable memory locations.

Examples within the scope of the present disclosure may also include tangible and/or non-transitory computer-readable storage media for carrying or having computer-executable instructions or data structures stored thereon. Such non-transitory computer-readable storage media may be any available media that may be accessed by a general purpose or special purpose computer, including the functional design of any special purpose processor as discussed above. By way of example, and not limitation, such non-transitory computer-readable media may include RAM, ROM, EEPROM, CD-ROM, or other optical disk storage, magnetic disk storage or other magnetic storage devices, or any other medium which may be used to carry or store desired program code means in the form of computer-executable instructions, data structures, or processor chip design. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other examples of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Examples may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

The various examples described above are provided by way of illustration only and should not be construed to limit the scope of the disclosure. For example, the principles herein apply not only to a slide based presentations but also to presentations of virtually any type, including live presentations using handheld devices or online presentation broadcasts. Those skilled in the art will readily recognize various modifications and changes that may be made to the principles described herein without following the example implementations and applications illustrated and described herein, and without departing from the scope of the disclosure.

In an example embodiment, the input device 1090 includes a front-facing camera and the output device 1070 includes a display. The display is displaying presentation data and, while the display is displaying the presentation data, the front-facing camera is capturing images of viewers viewing the display. The processor 1020 processes the captured images using digital image processing algorithms to determine whether more than one viewer is viewing the display of the device 1000. If the processor 1020 determines that more than one viewer is viewing the display, then the processor 1020 generates QR codes for any links in the presentation data that is being displayed on the display. The processor 1020 then causes the display to display the generated QR codes. Advantageously, viewers who are viewing the display but are not controlling the device 1000 or are not within reachable distance of the device 1000 to click the links being displayed can use their own camera-enabled devices to capture the QR codes being displayed on the device 1000 and access the links on their own devices.

In another example embodiment, the device 1000 includes a television. The communication interface 1080 includes a satellite connection or a cable service through which viewers of the television access television channels, such as CNN, FOX, ABC, etc. The television presents commercials or infomercials with links in the form of telephone numbers. In an example embodiment, the telephone numbers are displayed on the display of the television. The processor 1020 recognizes a telephone number being displayed on the display of the television, generates a QR code for the telephone number and displays the QR code for the telephone number on the display. A viewer watching the television and desiring to call the telephone number being displayed on the television uses his camera-enabled smart phone to capture an image of the QR code, the smart phone decodes the QR code, recognizes the information in the QR code as a phone number and provides the user with an option to call the phone number. Advantageously, the viewer does not have to transcribe the telephone number or manually enter the telephone number into the viewer's telephone through a number pad. In another example embodiment, the television receives a telephone number in the audio portion of a channel. The processor 1020 identifies a telephone number in the audio portion of a channel, generates a QR code for the telephone number and displays the QR code for the telephone number on the display of the television. Advantageously, telephone numbers that are included in the audio portion of a channel but might not be included in a video portion of the channel are presented to the viewer in the form of a QR code, thereby not imposing a burden on the viewer to transcribe or manually enter a telephone number that the viewer heard through the television. The digest approach can further be applied to provide a single QR code at the end of a television or other multimedia presentation containing a digest of multiple links, text, telephone numbers, or other resources or addresses. This single QR code can be inserted in the television program, for example, at the end of the program or as an overlay in a corner of the screen during the program.

## Claims

1. A computer-implemented method comprising:
identifying (702) a text-based link within a frame for rendering during a presentation, the text-based link pointing to a resource external to the presentation;
generating (704) a non-text, machine-readable link corresponding to the text-based link;
inserting (706) the non-text, machine-readable link into the frame at a location in the presentation associated with the text-based link; and
rendering (708) the non-text, machine-readable link within the frame.

2. The computer-implemented method of claim 1, wherein the non-text, machine readable link comprises at least one of a linear barcode, a 2-dimensional barcode, a QR code, a polar coordinate barcode, or a color-based barcode.

3. The computer-implemented method of any of claims 1-2, further comprising:
rendering the text-based link within the frame;
receiving actuation of the text-based link; and
upon receiving the actuation, rendering the non-text, machine-readable link within the frame.

4. The computer-implemented method of any of claims 1-3, further comprising:
prior to identifying the text-based link, receiving an indication that the frame is to be rendered in a live presentation mode.

5. The computer-implemented method of claim 4, wherein the indication is associated with an active connection to a projector.

6. The computer-implemented method of any of claims 1-5, wherein inserting the non-text, machine-readable link further comprises:
removing the text-based link from the frame; and
inserting the non-text, machine-readable link in the frame in place of the text-based link.

7. The computer-implemented method of any of claims 1-6, wherein inserting the non-text, machine-readable link further comprises:
inserting the non-text, machine-readable link in the frame proximate to the text-based link.

8. The computer-implemented method of any of claims 1-7, wherein inserting the non-text, machine-readable link further comprises:
inserting into the presentation, after the frame, an additional frame containing the non-text, machine-readable link.

9. The computer-implemented method of any of claims 1-8, further comprising:
identifying (802) a plurality of text-based links in the presentation, the text-based links pointing to respective resources external to the presentation;
compiling (804) the plurality of text-based links into a digest;
publishing (806) the digest at a network address; and
rendering (810), in the presentation, a digest non-text, machine-readable link to the network address.

10. The computer-implemented method of claim 9, further comprising:
inserting the digest non-text, machine-readable link on a separate page at the end of the presentation.

11. The computer-implemented method of any of claims 9-10, further comprising:
inserting the digest in the presentation on a same page as the non-text, machine-readable link.

12. The computer-implemented method of any of claims 9-11, wherein a size of the digest non-text, machine-readable link in the presentation is based on at least one of a screen size for displaying the presentation, a resolution of a screen displaying the presentation, an audience distance from the screen displaying the presentation, or a number of audience members.

13. The computer-implemented method of any of claims 9-12, wherein the non-text, machine-readable link is inserted in the presentation prior to presenting the presentation to an audience.

14. A system comprising:
a processor (1020) that communicates with a computer-readable storage medium (1060) having instructions stored thereon that, when executed by the processor (1020), cause the processor (1020) to perform steps of the method as recited in any of claims 1-13.

15. A non-transitory computer-readable storage medium having stored therein instructions which, when executed by an electronic device (1000), cause the electronic device (1000) to perform steps of the method as recited in any of claims 1-13.
